# EUROPEAN PATENT APPLICATION

(11) **EP 3 106 499 A1**
(43) Date of publication of application: **21.12.2016**
(21) Application number: 15746730.9
(22) Date of filing: 06.02.2015
(51) Int. Cl.: C09J 163/00, B32B 5/28, C09J 7/02, C09J 163/02, C09J 177/00

(54) **ADHESIVE RESIN COMPOSITION, ADHESIVE TAPE, ADHESIVE TAPE WITH SUBSTRATE, AND COMPOSITE ARTICLE**

(30) Priority: 10.02.2014 JP 2014023182; 10.02.2014 JP 2014023183; 15.05.2014 JP 2014101040; 15.05.2014 JP 2014101041; 24.12.2014 JP 2014259719; 24.12.2014 JP 2014259720
(71) Applicant: Nitto Denko Corporation, Ibaraki-shi, Osaka 567-8680 (JP)
(72) Inventor: FUJII, Takahiro, Ibaraki-shi Osaka 5678680 (JP); KOSO, Masatsugu, Ibaraki-shi Osaka 567-8680 (JP)
(74) Representative: Müller-Boré & Partner Patentanwälte PartG mbB
(86) International application number: PCT/JP2015/053323
(87) International publication number: WO 2015/119229

(57) **Abstract**

Provided are: an adhesive resin composition that can be used as an adhesive that conforms well to a fiber-reinforced thermoplastic (FRTP) and can express a sufficient adhesive strength to any other adherend; an adhesive tape formed by curing such composition; an adhesive tape with a base material having a base material layer and a layer formed by curing such composition; and a composite article containing any one of the composition and tapes, and a FRTP. The composition includes: a polyamide-based resin; and an epoxy-based resin. The content of the polyamide-based resin is 15 parts by weight or more and less than 100 parts by weight with respect to 100 parts by weight of the epoxy-based resin. The shearing adhesive strength of an adhesive tape formed by curing the composition to a FRTP is from 2.5 MPa to 70.0 MPa at 25°C and from 2.2 MPa to 70.0 MPa at 80°C.

## Description

### Technical Field

The present invention relates to anadhesive resin composition. The present invention also relates to an adhesive tape formed by curing the adhesive resin composition. The present invention also relates to an adhesive tape with a base material having a base material layer and a layer formed by curing the adhesive resin composition. The present invention also relates to a composite article containing any one of the adhesive resin composition, the adhesive tape, and the adhesive tape with a base material of the present invention, and a fiber-reinforced thermoplastic (FRTP).

### Background Art

In a transportation machine, such as a railway vehicle, an aircraft, a ship, or an automobile, a metal, such as iron or aluminum, has heretofore been generally used as a constituent material therefor. When the transportation machine is produced by using the metal, such as iron or aluminum, as a constituent material, the metal, such as iron or aluminum, needs to be sufficiently bonded to any other adherend. The use of an adhesive that can sufficiently express an adhesive strength even under a high temperature of about 80°C is required particularly because of the following nature. The transportation machine includes a heating element. A rubber epoxy-based curable resin composition has heretofore been generally used as such adhesive (for example, Patent Literature 1).

In recent years, a reduction in weight of such transportation machine has been required for an improvement in fuel efficiency or the like. A reduction in weight of a constituent material for the transportation machine provides an important key to reducing the weight of the machine.

A lightweight material that can replace the metal, such as iron or aluminum, is, for example, a fiber-reinforced plastic (FRP). A lightweight material particularly preferred as a constituent material for the transportation machine is, for example, a fiber-reinforced thermoplastic (FRTP) using a thermoplastic resin as a matrix resin because of a requirement for the ease of molding or the like.

However, it has heretofore been impossible to develop an adhesive that conforms well to the fiber-reinforced thermoplastic (FRTP) and can express a sufficient adhesive strength to any other adherend.

### Citation List

### Patent Literature

[PTL 1] JP 3229467 B2

### Summary of Invention

### Technical Problem

The present invention has been made to solve the conventional problems, and an object of the present invention is to provide an adhesive resin composition that can be used as an adhesive that conforms well to a fiber-reinforced thermoplastic (FRTP) and can express a sufficient adhesive strength to any other adherend. Another object of the present invention is to provide an adhesive tape formed by curing such adhesive resin composition. Another object of the present invention is to provide an adhesive tape with a base material having a base material layer and a layer formed by curing such adhesive resin composition. Another object of the present invention is to provide a composite article containing any one of the adhesive resin composition, the adhesive tape, and the adhesive tape with a base material of the present invention, and a fiber-reinforced thermoplastic (FRTP).

### Solution to Problem

An adhesive resin composition according to one embodiment of the present invention includes:
a polyamide-based resin; and
an epoxy-based resin,
in which a content of the polyamide-based resin is 15 parts by weight or more and less than 100 parts by weight with respect to 100 parts by weight of the epoxy-based resin.

In a preferred embodiment, the polyamide-based resin includes a fatty acid-modified polyamide-based resin.

In a preferred embodiment, the fatty acid-modified polyamide-based resin has a melting point of 180°C or less.

In a preferred embodiment, the epoxy-based resin contains at least one kind selected from a bisphenol A-type epoxy resin and a heat-resistant epoxy resin.

An adhesive resin composition according to one embodiment of the present invention includes:
a polyamide-based resin; and
an epoxy-based resin,
in which a shearing adhesive strength of an adhesive tape formed by curing the adhesive resin composition to a fiber-reinforced thermoplastic is from 2.5 MPa to 70.0 MPa at 25°C and from 2.2 MPa to 70.0 MPa at 80°C.

In a preferred embodiment, a shearing adhesive strength of the adhesive tape formed by curing the adhesive resin composition to a carbon fiber-reinforced thermoplastic is from 8.0 MPa to 100 MPa at 25°C and from 5.5 MPa to 100 MPa at 80°C.

In a preferred embodiment, a shearing adhesive strength of the adhesive tape formed by curing the adhesive resin composition to a glass fiber-reinforced thermoplastic is from 3.3 MPa to 70.0 MPa at 25°C and from 2.2 MPa to 70.0 MPa at 80°C.

An adhesive tape according to one embodiment of the present invention of the present invention is formed by curing the adhesive resin composition of the present invention.

An adhesive tape with a base material according to one embodiment of the present invention has a base material layer and a layer formed by curing the adhesive resin composition of the present invention.

A composite article according to one embodiment of the present invention includes the adhesive resin composition of the present invention on a surface of a fiber-reinforced thermoplastic.

In a preferred embodiment, in the composite article, at least one of a surface of the adhesive resin composition on a side of the fiber-reinforced thermoplastic or a surface of the fiber-reinforced thermoplastic on a side of the adhesive resin composition is subjected to at least one kind selected from a primer treatment, a sandblast treatment, and a plasma treatment.

A composite article according to one embodiment of the present invention includes the adhesive tape of the present invention arranged on a surface of a fiber-reinforced thermoplastic.

In a preferred embodiment, in the composite article, at least one of a surface of the adhesive tape on a side of the fiber-reinforced thermoplastic or a surface of the fiber-reinforced thermoplastic on a side of the adhesive tape is subjected to at least one kind selected from a primer treatment, a sandblast treatment, and a plasma treatment.

A composite article according to one embodiment of the present invention includes the adhesive tape with a base material of the present invention, which is arranged so that a side opposite to the base material layer of the adhesive tape with a base material faces toward a surface of a fiber-reinforced thermoplastic.

In a preferred embodiment, in the composite article, at least one of a surface of the adhesive tape with a base material on a side of the fiber-reinforced thermoplastic or a surface of the fiber-reinforced thermoplastic on a side of the adhesive tape with a base material is subjected to at least one kind selected from a primer treatment, a sandblast treatment, and a plasma treatment.

### Advantageous Effects of Invention

According to the present invention, the adhesive resin composition that can be used as an adhesive that conforms well to a fiber-reinforced thermoplastic (FRTP) and can express a sufficient adhesive strength to any other adherend can be provided. The adhesive tape formed by curing such adhesive resin composition can also be provided. The adhesive tape with a base material having a base material layer and a layer formed by curing such adhesive resin composition can also be provided. The composite article containing any one of the adhesive resin composition, the adhesive tape, and the adhesive tape with a base material of the present invention, and a fiber-reinforced thermoplastic (FRTP) can also be provided.

### Description of Embodiments

### «Adhesive Resin Composition»

An adhesive resin composition of the present invention contains a polyamide-based resin and an epoxy-based resin.

Any appropriate polyamide-based resin may be selected as the polyamide-based resin to be incorporated into the adhesive resin composition of the present invention to the extent that the effects of the present invention are not impaired. Examples of such polyamide-based resin include an aliphatic polyamide-based resin, an alicyclic polyamide-based resin, an aromatic polyamide-based resin, and a fatty acid-modified polyamide-based resin. Only one kind of the polyamide-based resins to be incorporated into the adhesive resin composition of the present invention may be used, or two or more kinds thereof may be used in combination.

The polyamide-based resin to be incorporated into the adhesive resin composition of the present invention preferably contains a fatty acid-modified polyamide-based resin because an adhesive resin composition that can be used as an adhesive that conforms better to a fiber-reinforced thermoplastic (FRTP) and can express a more sufficient adhesive strength to any other adherend can be provided. When the polyamide-based resin to be incorporated into the adhesive resin composition of the present invention contains the fatty acid-modified polyamide-based resin, an adhesive resin composition that can be used as an adhesive that conforms better to the fiber-reinforced thermoplastic (FRTP) and can express a more sufficient adhesive strength to any other adherend can be provided.

The content of the fatty acid-modified polyamide-based resin in the polyamide-based resin is preferably from 50 wt% to 100 wt%, more preferably from 70 wt% to 100 wt%, still more preferably from 90 wt% to 100 wt%, particularly preferably from 95 wt% to 100 wt%, most preferably 100 wt% . When the content of the fatty acid-modified polyamide-based resin in the polyamide-based resin falls within the range, an adhesive resin composition that can be used as an adhesive that conforms better to a fiber-reinforced thermoplastic (FRTP) and can express a more sufficient adhesive strength to any other adherend can be provided.

The fatty acid-modified polyamide-based resin means a polymerized fatty acid-based polyamide resin and/or a polymerized fatty acid-based polyamide block copolymer resin.

The polymerized fatty acid-based polyamide resin and/or the polymerized fatty acid-based polyamide block copolymer resin each contain/ contains a polymerized fatty acid as a monomer unit. Herein, the polymerized fatty acid is a dimer acid obtained by using oleic acid as a starting raw material, and is industrially a dibasic acid (number of carbon (C) atoms: 36) having the highest molecular weight. A polyamide resin obtained by using, as a dicarboxylic acid component, a polymerized fatty acid containing the dimer acid as a main component, and 13% to 17% of a monomer acid and a trimer acid as by-products is the polymerized fatty acid-based polyamide resin. The polymerized fatty acid-based polyamide block copolymer resin has a block except a polymerized fatty acid-based polyamide block, and contains a polyether ester amide resin or a polyester amide resin.

A terminal of the fatty acid-modified polyamide-based resin may be modified with a functional group, such as an amino group, a carboxyl group, or a hydroxyl group. The presence of such functional group can provide an adhesive resin composition that can be used as an adhesive that conforms better to a fiber-reinforced thermoplastic (FRTP) and can express a more sufficient adhesive strength to any other adherend. The fatty acid-modified polyamide-based resin having such functional group is sometimes referred to as "functional group-containing fatty acid-modified polyamide-based resin."

The fatty acid-modified polyamide-based resin is available as a commercial product. The resin is available from, for example, T&K TOKA Corporation (formerly Fujikasei Kogyo Co., Ltd.), and examples thereof include PA-100 (manufactured by T&K TOKA Corporation), PA-200 (manufactured by T&K TOKA Corporation), and PA-201 (manufactured by T&K TOKA Corporation). In addition, the functional group-containing fatty acid-modified polyamide-based resin is, for example, TXM-272 (fatty acid-modified polyamide-based resin having both a carboxyl group and an amino group, manufactured by T&K TOKA Corporation).

The melting point of the fatty acid-modified polyamide-based resin is preferably 180°C or less, more preferably from 80°C to 180°C, still more preferably from 80°C to 160°C, particularly preferably from 80°C to 130°C. When the melting point of the fatty acid-modified polyamide-based resin falls within the range, an adhesive resin composition that can be used as an adhesive that conforms better to a fiber-reinforced thermoplastic (FRTP) and can express a more sufficient adhesive strength to any other adherend can be provided.

Any appropriate epoxy-based resin may be selected as the epoxy-based resin to be incorporated into the adhesive resin composition of the present invention to the extent that the effects of the present invention are not impaired. Examples of such epoxy-based resin include a monoepoxy compound and a polyepoxy compound. Only one kind of the epoxy-based resins to be incorporated into the adhesive resin composition of the present invention may be used, or two or more kinds thereof may be used in combination.

Examples of the monoepoxy compound include butyl glycidyl ether, hexyl glycidyl ether, phenyl glycidyl ether, allyl glycidyl ether, p-tert-butylphenyl glycidyl ether, ethylene oxide, propylene oxide, p-xylyl glycidyl ether, glycidyl acetate, glycidyl butyrate, glycidyl hexoate, and glycidyl benzoate.

Examples of the polyepoxy compound include: a bisphenol-type epoxy resin in which a bisphenol, such as bisphenol A, bisphenol F, bisphenol AD, bisphenol S, tetramethylbisphenol A, tetramethylbisphenol F, tetramethylbisphenol AD, tetramethylbisphenol S, tetrabromobisphenol A, tetrachlorobisphenol A, or tetrafluorobisphenol A, is glycidylated; an epoxy resin in which any other dihydric phenol, such as a biphenol, dihydroxynaphthalene, or 9,9-bis(4-hydroxyphenyl)fluorene, is glycidylated; an epoxy resin in which a trisphenol, such as 1,1,1-tris(4-hydroxyphenyl)methane, or 4,4-(1-(4-(1-(4-hydroxyphenyl)-1-methylethyl)phenyl)ethylidene )bisphenol, is glycidylated; an epoxy resin in which a tetrakis phenol, such as 1,1,2,2-tetrakis(4-hydroxyphenyl)ethane, is glycidylated; a novolac-type epoxy resin in which a novolac, such as a phenol novolac, a cresol novolac, a bisphenol A novolac, a brominated phenol novolac, or a brominated bisphenol A novolac, is glycidylated; an epoxy resin in which a polyphenol is glycidylated; an aliphatic ether-type epoxy resin in which a polyhydric alcohol, such as glycerin or polyethylene glycol, is glycidylated; an ether ester-type epoxy resin in which a hydroxycarboxylic acid, such as p-oxybenzoic acid or β-oxynaphthoic acid, is glycidylated; an ester-type epoxy resin in which a polycarboxylic acid, such as phthalic acid or terephthalic acid, is glycidylated; a glycidylamine-type epoxy resin, including a glycidylated product of an amine compound, such as 4,4-diaminodiphenylmethane or m-aminophenol, and triglycidyl isocyanurate; a dicyclopentadiene-type epoxy resin; a naphthalene-type epoxy resin; a diphenyl sulfone-type epoxy resin; an alicyclic epoxide, such as 3,4-epoxycyclohexylmethyl-3', 4'-epoxycyclohexane carboxylate; and a diphenyldiaminomethane-type epoxy resin.

The epoxy-based resin to be incorporated into the adhesive resin composition of the present invention preferably contains at least one kind selected from a bisphenol A-type epoxy resin and a heat-resistant epoxy resin because an adhesive resin composition that can be used as an adhesive that conforms better to a fiber-reinforced thermoplastic (FRTP) and can express a more sufficient adhesive strength to any other adherend can be provided. The content of at least one kind selected from the bisphenol A-type epoxy resin and the heat-resistant epoxy resin in the epoxy-based resin is preferably from 50 wt% to 100 wt%, more preferably from 70 wt% to 100 wt%, still more preferably from 90 wt% to 100 wt%, particularly preferably from 95 wt% to 100 wt%, most preferably 100 wt%. When the content of at least one kind selected from the bisphenol A-type epoxy resin and the heat-resistant epoxy resin in the epoxy-based resin falls within the range, an adhesive resin composition that can be used as an adhesive that conforms better to the fiber-reinforced thermoplastic (FRTP) and can express a more sufficient adhesive strength to any other adherend can be provided.

An example of the bisphenol A-type epoxy resin is a bisphenol A-type epoxy resin in which a bisphenol A, such as bisphenol A, tetramethylbisphenol A, tetrabromobisphenol A, or tetrachlorobisphenol A, is glycidylated.

Examples of the heat-resistant epoxy resin include a high Tg skeleton-type epoxy resin and a polyfunctional type epoxy resin.

Examples of the high Tg skeleton-type epoxy resin include: a dicyclopentadiene-type epoxy resin; a naphthalene-type epoxy resin; and an alicyclic epoxide, such as a diphenyl sulfone-type epoxy resin or 3,4-epoxycyclohexylmethyl-3',4'-epoxycyclohexane carboxylate.

Examples of the polyfunctional type epoxy resin include a novolac-type epoxy resin in which a novolac, such as a phenol novolac, a cresol novolac, a bisphenol A novolac, a brominated phenol novolac , or a brominated bisphenol A novolac, is glycidylated; an epoxy resin in which a polyphenol is glycidylated; an aliphatic ether-type epoxy resin in which a polyhydric alcohol, such as glycerin or polyethylene glycol, is glycidylated; a glycidylamine-type epoxy resin, including a glycidylated product of an amine compound, such as 4,4-diaminodiphenylmethane or m-aminophenol, and triglycidyl isocyanurate; and a diphenyldiaminomethane-type epoxy resin.

The content of the polyamide-based resin in the adhesive resin composition of the present invention is 15 parts by weight or more and less than 100 parts by weight, preferably 15 parts by weight or more and less than 80 parts by weight, more preferably 20 parts by weight or more and less than 70 parts by weight, still more preferably 25 parts by weight or more and less than 50 parts by weight with respect to 100 parts by weight of the epoxy-based resin. When the content of the polyamide-based resin in the adhesive resin composition of the present invention falls within the range, an adhesive resin composition that can be used as an adhesive that conforms well to a fiber-reinforced thermoplastic (FRTP) and can express a sufficient adhesive strength to any other adherend can be provided.

The total content of the polyamide-based resin and the epoxy-based resin in the adhesive resin composition of the present invention is preferably from 50 wt% to 99 wt%, more preferably from 55 wt% to 99 wt%, still more preferably from 65 wt% to 97 wt%, particularly preferably from 70 wt% to 97 wt%. When the total content of the polyamide-based resin and the epoxy-based resin in the adhesive resin composition of the present invention falls within the range, an adhesive resin composition that can be used as an adhesive that conforms better to a fiber-reinforced thermoplastic (FRTP) and can express a more sufficient adhesive strength to any other adherend can be provided.

In the adhesive resin composition of the present invention, a tackifier may be contained in addition to the polyamide-based resin and the epoxy-based resin. Examples of the tackifier include a rosin-based resin, a terpene-based resin, a coumarone-indene-based resin, a petroleum-based resin, and a hydroxy group-containing aromatic compound (resorcin, catechol, or the like). The content of the tackifier is preferably from 0.1 part by weight to 20 parts by weight, more preferably from 1 part by weight to 8 parts by weight with respect to 100 parts by weight of the total of the polyamide-based resin and the epoxy-based resin. When the content of the tackifier is less than 0.1 part by weight with respect to 100 parts by weight of the total of the polyamide-based resin and the epoxy-based resin, an improving effect on the adhesive strength of the composition may be hardly obtained. When the content of the tackifier is more than 20 parts by weight with respect to 100 parts by weight of the total of the polyamide-based resin and the epoxy-based resin, the adhesive strength may reduce.

In the adhesive resin composition of the present invention, any appropriate other additive may be contained in addition to the polyamide-based resin and the epoxy-based resin to the extent that the effects of the present invention are not impaired. Examples of such additive include a curing agent, a thixotropic agent, a filler, a pigment, a lubricant (e.g., stearic acid), a stabilizer, an antiaging agent, an antioxidant, an ultraviolet absorbing agent, a coloring agent, a flame retardant, an antistatic agent, a electroconductivity-imparting agent, a sliding property-imparting agent, a surfactant, a silane coupling agent, and a foaming agent.

The shearing adhesive strength of an adhesive tape formed by curing the adhesive resin composition of the present invention to a fiber-reinforced thermoplastic (FRTP) at room temperature (25°C) is preferably from 2.0 MPa to 100 MPa, more preferably from 2.5 MPa to 70.0 MPa, still more preferably from 3.0 MPa to 50.0 MPa, particularly preferably from 3.5 MPa to 30. 0 MPa. When the shearing adhesive strength of the adhesive tape formed by curing the adhesive resin composition of the present invention to the fiber-reinforced thermoplastic (FRTP) at room temperature (25°C) falls within the range, an adhesive resin composition that can be used as an adhesive that conforms better to the fiber-reinforced thermoplastic (FRTP) and can express a more sufficient adhesive strength to any other adherend can be provided.

The shearing adhesive strength of an adhesive tape formed by curing the adhesive resin composition of the present invention to a carbon fiber-reinforced thermoplastic (CFRTP) at room temperature (25°C) is preferably from 8.0 MPa to 100 MPa, more preferably from 8.5 MPa to 70.0 MPa, still more preferably from 9.0 MPa to 50.0 MPa, particularlypreferably from 9.5 MPa to 30.0 MPa, most preferably from 10.0 MPa to 20.0 MPa. When the shearing adhesive strength of the adhesive tape formed by curing the adhesive resin composition of the present invention to the carbon fiber-reinforced thermoplastic (CFRTP) at room temperature (25°C) falls within the range, an adhesive resin composition that can be used as an adhesive that conforms better to the carbon fiber-reinforced thermoplastic (CFRTP) and can express a more sufficient adhesive strength to any other adherend can be provided.

The shearing adhesive strength of an adhesive tape formed by curing the adhesive resin composition of the present invention to a glass fiber-reinforced thermoplastic (GFRTP) at room temperature (25°C) is preferably from 3.0 MPa to 100 MPa, more preferably from 3.3 MPa to 70.0 MPa, still more preferably from 3.5 MPa to 50.0 MPa, particularly preferably from 3.7 MPa to 30.0 MPa. When the shearing adhesive strength of the adhesive tape formed by curing the adhesive resin composition of the present invention to the glass fiber-reinforced thermoplastic (GFRTP) at room temperature (25°C) falls within the range, an adhesive resin composition that can be used as an adhesive that conforms better to the glass fiber-reinforced thermoplastic (GFRTP) and can express a more sufficient adhesive strength to any other adherend can be provided.

The shearing adhesive strength of an adhesive tape formed by curing the adhesive resin composition of the present invention to a fiber-reinforced thermoplastic (FRTP) at 80°C is preferably from 2.0 MPa to 100 MPa, more preferably from 2.2 MPa to 70.0 MPa, still more preferably from 2.4 MPa to 70.0 MPa, even still more preferably from 2.5 MPa to 70.0 MPa, yet even still more preferably from 2.5 MPa to 50.0 MPa, yet even still more preferably from 2.6 MPa to 30.0 MPa, particularly preferably from 3.0 MPa to 30.0 MPa, most preferably from 3.5 MPa to 30.0 MPa. When the shearing adhesive strength of the adhesive tape formed by curing the adhesive resin composition of the present invention to the fiber-reinforced thermoplastic (FRTP) at 80°C falls within the range, an adhesive resin composition that can be used as an adhesive that conforms better to the fiber-reinforced thermoplastic (FRTP) and can express a more sufficient adhesive strength to any other adherend can be provided.

The shearing adhesive strength of an adhesive tape formed by curing the adhesive resin composition of the present invention to a carbon fiber-reinforced thermoplastic (CFRTP) at 80°C is preferably from 5.0 MPa to 100 MPa, more preferably from 5.5 MPa to 100.0 MPa, still more preferably from 6.0 MPa to 70.0 MPa, even still more preferably from 7.0 MPa to 50.0 MPa, particularly preferably from 8.0 MPa to 30.0 MPa, most preferably from 9.0 MPa to 20.0 MPa. When the shearing adhesive strength of the adhesive tape formed by curing the adhesive resin composition of the present invention to the carbon fiber-reinforced thermoplastic (CFRTP) at 80°C falls within the range, an adhesive resin composition that can be used as an adhesive that conforms better to the carbon fiber-reinforced thermoplastic (CFRTP) and can express a more sufficient adhesive strength to any other adherend can be provided.

The shearing adhesive strength of an adhesive tape formed by curing the adhesive resin composition of the present invention to a glass fiber-reinforced thermoplastic (GFRTP) at 80°C is preferably from 2.0 MPa to 100 MPa, more preferably from 2.2 MPa to 70.0 MPa, still more preferably from 2.4 MPa to 50.0 MPa, particularly preferably from 2.6 MPa to 30.0 MPa. When the shearing adhesive strength of the adhesive tape formed by curing the adhesive resin composition of the present invention to the glass fiber-reinforced thermoplastic (GFRTP) at 80°C falls within the range, an adhesive resin composition that can be used as an adhesive that conforms better to the glass fiber-reinforced thermoplastic (GFRTP) and can express a more sufficient adhesive strength to any other adherend can be provided.

The shearing adhesive strength of the adhesive tape formed by curing the adhesive resin composition of the present invention to a fiber-reinforced thermoplastic (FRTP) is preferably from 2.0 MPa to 100 MPa at room temperature (25°C) and from 2.0 MPa to 100 MPa at 80°C, more preferably from 2.5 MPa to 70.0 MPa at room temperature (25°C) and from 2.2 MPa to 70.0 MPa at 80°C, still more preferably from 3.0 MPa to 50.0 MPa at room temperature (25°C) and from 2.4 MPa to 50.0 MPa at 80°C, particularly preferably from 3.5 MPa to 30.0 MPa at room temperature (25°C) and from 2.6 MPa to 30.0 MPa at 80°C. When the shearing adhesive strength of the adhesive tape formed by curing the adhesive resin composition of the present invention to the fiber-reinforced thermoplastic (FRTP) falls within the range, an adhesive resin composition that can be used as an adhesive that conforms better to the fiber-reinforced thermoplastic (FRTP) and can express a more sufficient adhesive strength to any other adherend can be provided.

The shearing adhesive strength of the adhesive tape formed by curing the adhesive resin composition of the present invention to a carbon fiber-reinforced thermoplastic (CFRTP) is preferably from 8.0 MPa to 100 MPa at room temperature (25°C) and from 5.0 MPa to 100 MPa at 80°C, more preferably from 8.0 MPa to 100.0 MPa at room temperature (25°C) and from 5.5 MPa to 70.0 MPa at 80°C, still more preferably from 8.5 MPa to 70.0 MPa at room temperature (25°C) and from 6.0 MPa to 70.0 MPa at 80°C, even still more preferably from 9.0 MPa to 50.0 MPa at room temperature (25°C) and from 7.0 MPa to 50.0 MPa at 80°C, particularly preferably from 9.5 MPa to 30.0 MPa at room temperature (25°C) and from 8.0 MPa to 30.0 MPa at 80°C, most preferably from 10.0 MPa to 20.0 MPa at room temperature (25°C) and from 9.0 MPa to 20.0 MPa at 80°C. When the shearing adhesive strength of the adhesive tape formed by curing the adhesive resin composition of the present invention to the carbon fiber-reinforced thermoplastic (CFRTP) falls within the range, an adhesive resin composition that can be used as an adhesive that conforms better to the carbon fiber-reinforced thermoplastic (CFRTP) and can express a more sufficient adhesive strength to any other adherend can be provided.

The shearing adhesive strength of the adhesive tape formed by curing the adhesive resin composition of the present invention to a glass fiber-reinforced thermoplastic (GFRTP) is preferably from 3.0 MPa to 100 MPa at room temperature (25°C) and from 2.0 MPa to 100 MPa at 80°C, more preferably from 3.3 MPa to 70.0 MPa at room temperature (25°C) and from 2.2 MPa to 70.0 MPa at 80°C, still more preferably from 3.5 MPa to 50.0 MPa at room temperature (25°C) and from 2.4 MPa to 50.0 MPa at 80°C, particularly preferably from 3.7 MPa to 30.0 MPa at room temperature (25°C) and from 2.6 MPa to 30.0 MPa at 80°C. When the shearing adhesive strength of the adhesive tape formed by curing the adhesive resin composition of the present invention to the glass fiber-reinforced thermoplastic (GFRTP) falls within the range, an adhesive resin composition that can be used as an adhesive that conforms better to the glass fiber-reinforced thermoplastic (GFRTP) and can express a more sufficient adhesive strength to any other adherend can be provided.

### «Adhesive Tape»

An adhesive tape of the present invention is formed by curing the adhesive resin composition of the present invention. Any appropriate method may be adopted as a method for the curing to the extent that the effects of the present invention are not impaired.

The adhesive tape of the present invention can be obtained as a sheet-shaped adhesive tape by, for example, applying the adhesive resin composition onto any appropriate separator and curing the composition. The separator may be peeled at the time of the use of the tape.

Any appropriate thickness may be adopted as the thickness of the adhesive tape of the present invention depending on purposes. Such thickness is, for example, preferably from 5 µm to 5,000 µm, more preferably from 50 µm to 2,000 µm, still more preferably from 100 µm to 1,000 µm, particularly preferably from 200 µm to 1,000 µm.

### «Adhesive Tape with Base Material»

An adhesive tape with a base material of the present invention has a base material layer and a layer formed by curing the adhesive resin composition of the present invention.

Any appropriate base material layer may be adopted as the base material layer to the extent that the effects of the present invention are not impaired. Examples of such base material layer include a nonwoven fabric, a glass cloth, a synthetic resin nonwoven fabric, a plastic, and a carbon cloth. The introduction of the base material layer is useful in terms of, for example, an improvement in handleability of the tape and the securement of the thickness of an adhesion layer after the curing.

A nonwoven fabric, such as a polyester nonwoven fabric or a vinylon nonwoven fabric, is preferably used as the base material layer in terms of flexibility and heat resistance, and the polyester nonwoven fabric is more preferably used. When a nonwoven fabric is used as the base material layer, its mass per unit area is preferably from 10 g/m² to 300 g/m², more preferably from 20 g/m² to 100 g/m² because the effects of the present invention can be more effectively expressed.

Any appropriate thickness may be adopted as the thickness of the base material layer depending on purposes. Such thickness is, for example, preferably from 10 µm to 2,000 µm, more preferably from 50 µm to 1,000 µm, still more preferably from 100 µm to 500 µm, particularly preferably from 200 µm to 400 µm.

The layer formed by curing the adhesive resin composition of the present invention is formed by curing the adhesive resin composition of the present invention. Any appropriate method may be adopted as a method for the curing to the extent that the effects of the present invention are not impaired.

The layer formed by curing the adhesive resin composition of the present invention can be obtained as a layer by, for example, applying the adhesive resin composition onto any appropriate separator and curing the composition. After that, the adhesive tape with a base material of the present invention can be obtained by attaching, to the base material layer, the side of the layer formed by curing the adhesive resin composition of the present invention on which the separator is not present. The separator may be peeled at the time of the use of the tape.

The adhesive tape with a base material of the present invention can also be obtained by applying the adhesive resin composition onto the base material layer and curing the composition.

Any appropriate thickness may be adopted as the thickness of the adhesive tape with a base material of the present invention depending on purposes. Such thickness is, for example, preferably from 10 µm to 5,000 µm, more preferably from 50 µm to 2,000 µm, still more preferably from 100 µm to 1,000 µm, particularly preferably from 200 µm to 1,000 µm.

### «Composite Article>>

### (Composite Article having Adhesive Resin Composition of the Present Invention)

A first composite article of the present invention has the adhesive resin composition of the present invention on the surface of a fiber-reinforced thermoplastic (FRTP). The composite article is preferably obtained by forming the adhesive resin composition of the present invention on the surface of the fiber-reinforced thermoplastic, and the adhesive resin composition is, for example, applied, attached, or laminated onto the entirety or part of the surface of the fiber-reinforced thermoplastic molded by pressing, injection molding, or the like to form an adhesive resin composition layer on the surface of the fiber-reinforced thermoplastic. Examples of the fiber-reinforced thermoplastic (FRTP) of the first composite article of the present invention include a carbon fiber-reinforced thermoplastic (CFRTP) and a glass fiber-reinforced thermoplastic (GFRTP). Of those, a carbon fiber-reinforced thermoplastic (CFRTP) is preferred because the effects of the present invention can be further expressed. Any appropriate carbon fiber-reinforced thermoplastic (CFRTP) may be adopted as the carbon fiber-reinforced thermoplastic (CFRTP). Examples of such carbon fiber-reinforced thermoplastic (CFRTP) include a PA66-based carbon fiber-reinforced thermoplastic, a PPS-based carbon fiber-reinforced thermoplastic, a TPU-based carbon fiber-reinforced thermoplastic, and a PP-based carbon fiber-reinforced thermoplastic. Inaddition, any appropriate glass fiber-reinforced thermoplastic (GFRTP) may be adopted as the glass fiber-reinforced thermoplastic (GFRTP). Such glass fiber-reinforced thermoplastic (GFRTP) is, for example, a PP-based glass fiber-reinforced thermoplastic. Surface polishing (e.g., a sandpaper treatment or a sandblast treatment), a plasma treatment, a corona treatment, a primer treatment, or the like can be performed on the surface of the fiber-reinforced thermoplastic in advance as required.

The sandblast treatment is a surface processing method involving causing an abrasive (media) to collide with a treatment object, and comes in, for example, dry and wet approaches. A sandblast treatment for an adhesion portion is preferably a dry treatment from the viewpoint of workability. The abrasive is of, for example, a soft type using resin beads or the like, or a hard type using a metal, a ceramic, or the like. Of such abrasives, a ceramic-based abrasive, such as white alumina, is preferred in the present invention from the viewpoints of processability and corrosion resistance. The count of the abrasive is preferably from #22 to #2,000. In the sandblast treatment, a projection pressure, and a distance between the abrasive and the treatment object can be appropriately set to conditions under which the treatment object can be uniformly processed.

Plasma is a fourth state produced by further applying energy to a substance in a gas state to ionize the substance. An ion serving as a charged particle and a radical serving as an electrically neutral active species are present in the plasma. When any such particle or active species collides with the surface of a solid to cause a physical reaction and a chemical reaction, etching or surface modification becomes possible. The foregoing is the plasma treatment. Low-pressure plasma, atmospheric-pressure plasma, or the like is used in the plasma treatment. Of such kinds of plasma, atmospheric-pressure plasma is preferred because of the following reasons: the plasma does not require a vacuum apparatus, such as a vacuum vessel or an exhaust apparatus, and hence can shorten a treatment time; and the plasma is effective for the treatment of a part having a complicated and large shape. In addition, the atmospheric-pressure plasma has a larger amount of raw material gas molecules than the low-pressure plasma does. Accordingly, plasma having an extremely high density can be produced and hence a high-speed treatment process can be expected in the etching or the surface modification. An apparatus for the plasma treatment involving using the atmospheric-pressure plasma is, for example, FPE20 Atmospheric-pressure Plasma Treatment Apparatus manufactured by Fuji Machine MFG. Co. , Ltd. A plasma treatment speed is preferably from 1 mm/sec to 500 mm/sec because a treatment at high speed is desired for the shortening of an operation time. An irradiation distance is preferably from 1 mm to 20 mm because such a distance that the apparatus does not interfere with an article to be treated needs to be stably secured.

In the first composite article of the present invention, in order that the conformity of the adhesive resin composition of the present invention to the fiber-reinforced thermoplastic (FRTP) may be expressed more significantly, the surfaces/surface of the adhesive resin composition of the present invention and/or the fiber-reinforced thermoplastic (FRTP) (surfaces/surface on a side where the composition and the thermoplastic are in contact with each other) are each/is preferably subjected to a plasma treatment or a primer treatment, more preferably subjected to the primer treatment.

### (Composite Article having Adhesive Tape of the Present Invention)

A second composite article of the present invention has the adhesive tape of the present invention arranged on the surface of a fiber-reinforced thermoplastic (FRTP). The composite article is preferably obtained by laminating the adhesive tape of the present invention on the surface of the fiber-reinforced thermoplastic, and the adhesive tape is, for example, attached or laminated onto the entirety or part of the surface of the fiber-reinforced thermoplastic molded by pressing, injection molding, or the like to arrange the adhesive tape on the surface of the fiber-reinforced thermoplastic. Examples of the fiber-reinforced thermoplastic (FRTP) of the second composite article of the present invention include a carbon fiber-reinforced thermoplastic (CFRTP) and a glass fiber-reinforced thermoplastic (GFRTP). Of those, a carbon fiber-reinforced thermoplastic (CFRTP) is preferred because the effects of the present invention can be further expressed. Any appropriate carbon fiber-reinforced thermoplastic (CFRTP) may be adopted as the carbon fiber-reinforced thermoplastic (CFRTP). Examples of such carbon fiber-reinforced thermoplastic (CFRTP) include a PA66-based carbon fiber-reinforced thermoplastic, a PPS-based carbon fiber-reinforced thermoplastic , a TPU-based carbon fiber-reinforced thermoplastic, and a PP-based carbon fiber-reinforced thermoplastic. In addition, any appropriate glass fiber-reinforced thermoplastic (GFRTP) may be adopted as the glass fiber-reinforced thermoplastic (GFRTP). Such glass fiber-reinforced thermoplastic (GFRTP) is, for example, a PP-based glass fiber-reinforced thermoplastic. Surface polishing (e.g., a sandpaper treatment or a sandblast treatment), a plasma treatment, a corona treatment, a primer treatment, or the like can be performed on the surface of the fiber-reinforced thermoplastic in advance as required.

In the second composite article of the present invention, in order that the conformity of the adhesive tape of the present invention to the fiber-reinforced thermoplastic (FRTP) may be expressed more significantly, the surfaces/surface of the adhesive tape of the present invention and/or the fiber-reinforced thermoplastic (FRTP) (surfaces/surface on a side where the tape and the thermoplastic are in contact with each other) are each/is preferably subjected to a plasma treatment or a primer treatment, more preferably subj ected to the primer treatment.

### (Composite Article having Adhesive Tape with Base Material of the Present Invention)

In a third composite article of the present invention, the adhesive tape with abase material of the present invention is arranged so that a side opposite to the base material layer of the adhesive tape with a base material faces toward the surface of a fiber-reinforced thermoplastic (FRTP). The composite article is preferably obtained by laminating the side opposite to the base material layer of the adhesive tape with a base material of the present invention on the surface of the fiber-reinforced thermoplastic, and the side opposite to the base material layer of the adhesive tape with a base material is, for example, attached or laminated onto the entirety or part of the surface of the fiber-reinforced thermoplastic molded by pressing, injection molding, or the like to arrange the adhesive tape with a base material on the surface of the fiber-reinforced thermoplastic. Examples of the fiber-reinforced thermoplastic (FRTP) of the third composite article of the present invention include a carbon fiber-reinforced thermoplastic (CFRTP) and a glass fiber-reinforced thermoplastic (GFRTP). Of those, a carbon fiber-reinforced thermoplastic (CFRTP) is preferred because the effects of the present invention can be further expressed. Any appropriate carbon fiber-reinforced thermoplastic (CFRTP) may be adopted as the carbon fiber-reinforced thermoplastic (CFRTP). Examples of such carbon fiber-reinforced thermoplastic (CFRTP) include a PA66-based carbon fiber-reinforced thermoplastic, a PPS-based carbon fiber-reinforced thermoplastic, a TPU-based carbon fiber-reinforced thermoplastic, and a PP-based carbon fiber-reinforced thermoplastic. In addition, any appropriate glass fiber-reinforced thermoplastic (GFRTP) may be adopted as the glass fiber-reinforced thermoplastic (GFRTP). Such glass fiber-reinforced thermoplastic (GFRTP) is, for example, a PP-based glass fiber-reinforced thermoplastic. Surface polishing (e.g., a sandpaper treatment or a sandblast treatment), a plasma treatment, a corona treatment, a primer treatment, or the like can be performed on the surface of the fiber-reinforced thermoplastic in advance as required.

In the third composite article of the present invention, in order that the conformity of the adhesive tape with a base material of the present invention to the fiber-reinforced thermoplastic (FRTP) may be expressed more significantly, the surfaces/surface of the adhesive tape with a base material of the present invention and/or the fiber-reinforced thermoplastic (FRTP) (surfaces/surface on a side where the tape and the thermoplastic are in contact with each other) are each/is preferably subjected to a plasma treatment or a primer treatment, more preferably subjected to the primer treatment.

### (Primer Treatment)

In the first, second, or third composite article of the present invention, any appropriate primer may be adopted as a primer that can be used for the primer treatment as long as the primer enables more significant expression of the conformity of the adhesive resin composition of the present invention to the fiber-reinforced thermoplastic (FRTP), the conformity of the adhesive tape of the present invention to the fiber-reinforced thermoplastic (FRTP), or the conformity of the adhesive tape with a base material of the present invention to the fiber-reinforced thermoplastic (FRTP). Of such primers, a primer formed of an alcohol solution containing a phenol, a primer containing a silane compound and an alcohol, or a primer containing chlorinated polypropylene and a toluene solution is preferred because any such primer enables extremely significant expression of the conformity of the adhesive resin composition of the present invention to the fiber-reinforced thermoplastic (FRTP), the conformity of the adhesive tape of the present invention to the fiber-reinforced thermoplastic (FRTP), or the conformity of the adhesive tape with a base material of the present invention to the fiber-reinforced thermoplastic (FRTP). In particular, when the fiber-reinforced thermoplastic (FRTP) is a PA-based fiber-reinforced thermoplastic, a primer formed of an alcohol solution containing a phenol, or a primer containing a silane compound and an alcohol is preferred, and when the fiber-reinforced thermoplastic (FRTP) is a PP-based fiber-reinforced thermoplastic, a primer containing chlorinated polypropylene and a toluene solution is preferred.

When the primer formed of an alcohol solution containing a phenol is adopted, the content of the phenol in the primer is preferably from 1 wt% to 80 wt%, more preferably from 3 wt% to 60 wt%, still more preferably from 5 wt% to 50 wt%, particularly preferably from 7 wt% to 40 wt%, most preferably from 10 wt% to 30 wt% because the conformity of the adhesive resin composition of the present invention to the fiber-reinforced.thermoplastic (FRTP), the conformity of the adhesive tape of the present invention to the fiber-reinforced thermoplastic (FRTP), or the conformity of the adhesive tape with a base material of the present invention to the fiber-reinforced thermoplastic (FRTP) can be expressed in an extremely significant manner.

When the primer formed of an alcohol solution containing a phenol is adopted, the phenol in the primer is preferably 1,3-dihydroxybenzene because the conformity of the adhesive resin composition of the present invention to the fiber-reinforced thermoplastic (FRTP), the conformity of the adhesive tape of the present invention to the fiber-reinforced thermoplastic (FRTP), or the conformity of the adhesive tape with a base material of the present invention to the fiber-reinforced thermoplastic (FRTP) can be expressed in an extremely significant manner.

Any appropriate method may be adopted as a method for the primer treatment as long as the method enables sufficient expression of the effects of the present invention. Examples of suchmethod include the following methods.

When the first composite article of the present invention is obtained, the primer treatment is performed by: applying the primer to the surfaces/surface of the adhesive resin composition of the present invention and/or the fiber-reinforced thermoplastic (FRTP) (surfaces/surface on the side where the composition and the thermoplastic are in contact with each other) through brushing, wiping, dipping, spraying, or the like; and drying the primer as required. After that, the adhesive resin composition of the present invention and the fiber-reinforced thermoplastic (FRTP) at least one of which has been subjected to the primer treatment are subjected to, for example, application (in this case, the adhesive resin composition of the present invention that has not been subjected to the primer treatment is applied to the fiber-reinforced thermoplastic (FRTP) that has been subjected to the primer treatment), attachment, or lamination to provide a laminated structural body.

When the second composite article of the present invention is obtained, the primer treatment is performed by: applying the primer to the surfaces/surface of the adhesive tape of the present invention and/or the fiber-reinforced thermoplastic (FRTP) (surfaces/surface on the side where the tape and the thermoplastic are in contact with each other) through brushing, wiping, dipping, spraying, or the like; and drying the primer as required. After that, the adhesive tape of the present invention and the fiber-reinforced thermoplastic (FRTP) at least one of which has been subjected to the primer treatment are subj ected to, for example, attachment or lamination to provide a laminated structural body.

When the third composite article of the present invention is obtained, the primer treatment is performed by: applying the primer to the surfaces/surface of the adhesive tape with a base material of the present invention and/or the fiber-reinforced thermoplastic (FRTP) (surfaces/surface on the side where the tape and the thermoplastic are in contact with each other) through brushing, wiping, dipping, spraying, or the like; and drying the primer as required. After that, the adhesive tape with a base material of the present invention and the fiber-reinforced thermoplastic (FRTP) at least one of which has been subjected to the primer treatment are subjected to, for example, attachment or lamination to provide a laminated structural body.

### Examples

<Shearing Adhesive Strength>

Two FRTP plate materials each measuring 25 mm wide by 100 mm long (each of which was any one of TEPEX dynalite 201-C200 (PA66-based carbon fibers, thickness: 2 mm), TEPEX dynalite 207-C200 (PPS-based carbon fibers, thickness: 2 mm), TEPEX dynalite 208-C200 (TPU-based carbon fibers, thickness: 1 mm), and TEPEX dynalite 104-RG600 (PP-based glass fibers, thickness: 2 mm) manufactured by Bond Laminates), the plate materials having been subjected to surface polishing with a desktop belt sander having mounted thereon an endless belt #60 and then been cleaned with isopropyl alcohol, were prepared.

When a FRTP plate material subjected to a primer treatment was used, various primers impregnated into a waste cloth made of paper were applied to the FRTP plate material, and the resultant was left to stand under an atmosphere at 25°C for 30 minutes.

RC-1017 (primer containing chlorinated polypropylene and a toluene solution, manufactured by Lord Far East Inc.), AP-134 (primer containing a silane compound and an alcohol, manufactured by Lord Far East Inc.), and a primer (1) (alcohol solution prepared to have composition formed of 40 wt% of methanol, 20 wt% of ethanol, 20 wt% of isopropyl alcohol, and 20 wt% of 1,3-dihydroxybenzene) were used as the primers.

When a FRTP plate material subjected to a plasma treatment was used, a 20-millimeter portion in an end portion of the FRTP plate material serving as an adherend was treated with FPE20 Atmospheric-pressure Plasma Treatment Apparatus manufactured by Fuji Machine MFG. Co., Ltd. at a nitrogen gas flow rate of 30 L/min, an oxygen gas flow rate of 20 L/min, and an irradiation distance of 10 mm once.

An irradiation speed when the plasma treatment was performed was set to 11 mm/sec for the TEPEX dynalite 201-C200 (PA66-based carbon fibers, thickness: 2 mm), 25 mm/sec for the TEPEX dynalite 207-C200 (PPS-based carbon fibers, thickness: 2 mm), 66 mm/sec for the TEPEX dynalite 208-C200 (TPU-based carbon fibers, thickness: 1 mm), and 100 mm/sec for the TEPEX dynalite 104-RG600 (PP-based glass fibers, thickness: 2 mm).

When a FRTP plate material subjected to a sandblast treatment was used, an abrasive (FUJIRANDOM WHITE ALUNDUM (WA) manufactured by Fuji Manufacturing Co., Ltd.) was jetted toward the plate material at a pressure of 0.5 MPa and a distance of 100 mm instead of the surface polishing with the belt sander to polish the plate material until its surface became uniform. It was confirmed that the following unevenness was formed depending on the size of the abrasive: unevenness having a size of up to about 60 µm was formed on the surface of the adherend when the abrasive size was #24, unevenness having a size of up to about 16 µm was formed on the surface of the adherend when the abrasive size was #100, and unevenness having a size of up to about 12 µm was formed on the surface of the adherend when the abrasive size was #220. After the surface polishing, the resultant was cleaned with isopropyl alcohol.

Next, an adhesive tape obtained in each of Examples and Comparative Examples was cut to measure 25 mm wide by 12.5 mm long.

The two FRTP plate materials were attached to each other with the adhesive tape under an atmosphere at 20°C by applying a load of 2 kg for 5 seconds so that the plate materials overlapped each other in a portion measuring 25 mm wide by 12.5 mm long from an end portion of each of the plate materials, followed by fixation with a paper clip. After that, the adhesive tape was cured by heating the resultant at 150°C for 20 minutes. Thus, a test piece was produced.

The test piece was cooled to room temperature (25°C). After that, the test piece was chucked at portions distant by 40 mm each from both of its end portions, and a tensile test was performed at a test speed of 5 mm/min to measure its maximum shearing adhesive strength. Its shearing adhesive strength at 80°C was measured as follows: the test piece was left to stand under an atmosphere at 80 °C for 30 minutes, and then the measurement was similarly performed under the atmosphere at 80°C.

### [Example 1]

60 Parts by weight of a bisphenol A-type epoxy resin (grade: 834, manufactured by Mitsubishi Chemical Corporation), 40 parts by weight of a polyamide resin (grade: TXM-272, fatty acid-modified polyamide-based resin having both a carboxyl group and an amino group, melting point: 111°C, manufactured by T&K TOKA Corporation), 2 parts by weight of a curing agent (DCMU-99, manufactured by Hodogaya Chemical Co. , Ltd.), and 5 parts by weight of a curing agent (DDA50, manufactured by CVC Thermoset Specialties) were blended, and the blend was kneaded with a mixing roll to prepare a resin composition (1) as a kneaded product.

Next, the resultant resin composition (1) was rolled with a press molding machine to have a thickness of 0.2 mm in a state of being sandwiched between sheets of release paper. Thus, a resin layer was formed. After that, the release paper on one surface of the resin layer was peeled, and the resin layer was attached to each of both sides of a nonwoven fabric base material (polyester-based spun lace, mass per unit area=37.5 g/m², thickness=0.28 mm). The resultant was rolled with the press molding machine again to have athicknessof 0.5mm. Thus, anadhesivetape (1A) withabasematerial was obtained.

The results are shown in Table 1.

### [Example 2]

A resin composition (2) was prepared as a kneaded product in the same manner as in Example 1 except that the blending ratios of the materials for obtaining the resin composition were changed as shown in Table 1.

Next, the resultant resin composition (2) was rolled with a press molding machine to have a thickness of 0.2 mm in a state of being sandwiched between sheets of release paper. Thus, a resin layer was formed. After that, the release paper on one surface of the resin layer was peeled, and the resin layer was attached to each of both sides of a nonwoven fabric base material (polyester-based spun lace, mass per unit area=37.5 g/m², thickness=0.28 mm). The resultant was rolled with the press molding machine again to have a thickness of 0.5 mm. Thus, an adhesive tape (2A) with a base material was obtained.

The results are shown in Table 1.

### [Example 3]

A resin composition (3) was prepared as a kneaded product in the same manner as in Example 1 except that the blending ratios of the materials for obtaining the resin composition were changed as shown in Table 1.

Next, the resultant resin composition (3) was rolled with a press molding machine to have a thickness of 0.2 mm in a state of being sandwiched between sheets of release paper. Thus, a resin layer was formed. After that, the release paper on one surface of the resin layer was peeled, and the resin layer was attached to each of both sides of a nonwoven fabric base material (polyester-based spun lace, mass per unit area=37.5 g/m², thickness=0.28 mm). The resultant was rolled with the press molding machine again to have a thickness of 0.5 mm. Thus, an adhesive tape (3A) withabasematerial was obtained.

The results are shown in Table 1 and Table 3.

### [Example 4]

50 Parts by weight of a bisphenol A-type epoxy resin (grade: 834, manufactured by Mitsubishi Chemical Corporation), 20 parts by weight of a diphenyldiaminomethane-type epoxy resin (grade: JER604, manufactured by Mitsubishi Chemical Corporation), 30 parts by weight of a polyamide resin (grade: TXM-272, fatty acid-modified polyamide-based resin having both a carboxyl group and an amino group, melting point: 111°C, manufactured by T&K TOKA Corporation), 2 parts by weight of a curing agent (DCMU-99, manufactured by Hodogaya Chemical Co. , Ltd.), and 5 parts by weight of a curing agent (DDA50, manufactured by CVC Thermoset Specialties) were blended, and the blend was kneaded with a mixing roll to prepare a resin composition (4) as a kneaded product.

Next, the resultant resin composition (4) was rolled with a press molding machine to have a thickness of 0.2 mm in a state of being sandwiched between sheets of release paper. Thus, a resin layer was formed. After that, the release paper on one surface of the resin layer was peeled, and the resin layer was attached to each of both sides of a nonwoven fabric base material (polyester-based spun lace, mass per unit area=37.5 g/m², thickness=0.28 mm). The resultant was rolled with the press molding machine again to have athicknessof 0.5mm. Thus, anadhesivetape (4A) withabasematerial was obtained.

The results are shown in Table 1 and Table 4.

### [Example 5]

50 Parts by weight of a bisphenol A-type epoxy resin (grade: 834, manufactured by Mitsubishi Chemical Corporation), 20 parts by weight of a cresol novolac-type epoxy resin (grade: YDCN704, manufactured by Nippon Steel & Sumikin Chemical Co. , Ltd.), 30 parts by weight of a polyamide resin (grade: TXM-272, fatty acid-modified polyamide-based resin having both a carboxyl group and an amino group, melting point: 111°C, manufactured by T&K TOKA Corporation), 2 parts by weight of a curing agent (DCMU-99, manufactured by Hodogaya Chemical Co. , Ltd.), and 5 parts by weight of a curing agent (DDA50, manufactured by CVC Thermoset Specialties) were blended, and the blend was kneaded with a mixing roll to prepare a resin composition (5) as a kneaded product.

Next, the resultant resin composition (5) was rolled with a press molding machine to have a thickness of 0.2 mm in a state of being sandwiched between sheets of release paper. Thus, a resin layer was formed. After that, the release paper on one surface of the resin layer was peeled, and the resin layer was attached to each of both sides of a nonwoven fabric base material (polyester-based spun lace, mass per unit area=37.5 g/m², thickness=0.28 mm). The resultant was rolled with the press molding machine again to have athicknessof 0.5mm. Thus, anadhesivetape (5A) withabasematerial was obtained.

The results are shown in Table 1, Table 5, Table 6, and Table 7.

With regard to the evaluation of a shearing adhesive strength when a tackifier was added to the resin composition (5), the evaluation was performed by further adding 5 parts by weight of the tackifier (resorcin (manufactured by Sumitomo Chemical Co. , Ltd.) or catechol (manufactured by Tokyo Chemical Industry Co., Ltd.)) to the composition of the resin composition (5).

### [Example 6]

A resin composition (6) was prepared as a kneaded product in the same manner as in Example 4 except that the blending ratios of the materials for obtaining the resin composition were changed as shown in Table 1.

Next, the resultant resin composition (6) was rolled with a press molding machine to have a thickness of 0.2 mm in a state of being sandwiched between sheets of release paper. Thus, a resin layer was formed. After that, the release paper on one surface of the resin layer was peeled, and the resin layer was attached to each of both sides of a nonwoven fabric base material (polyester-based spun lace, mass per unit area=37.5 g/m², thickness=0.28 mm). The resultant was rolled with the press molding machine again to have athicknessof 0.5mm. Thus, anadhesivetape (6A) with a base material was obtained.

The results are shown in Table 1.

### [Example 7]

70 Parts by weight of a bisphenol A-type epoxy resin (grade: 834, manufactured by Mitsubishi Chemical Corporation), 30 parts by weight of a polyamide resin (grade: PA-201, fatty acid-modified polyamide-based resin, melting point: 122°C, manufactured by T&K TOKA Corporation), 2 parts by weight of a curing agent (DCMU-99, manufactured by Hodogaya Chemical Co., Ltd.), and 5 parts by weight of a curing agent (DDA5 0, manufactured by CVC Thermoset Specialties) were blended, and the blend was kneaded with a mixing roll to prepare a resin composition (7) as a kneaded product.

Next, the resultant resin composition (7) was rolled with a press molding machine to have a thickness of 0.2 mm in a state of being sandwiched between sheets of release paper. Thus, a resin layer was formed. After that, the release paper on one surface of the resin layer was peeled, and the resin layer was attached to each of both sides of a nonwoven fabric base material (polyester-based spun lace, mass per unit area=37.5 g/m², thickness=0.28 mm). The resultant was rolled with the press molding machine again to have a thickness of 0.5 mm. Thus, an adhesive tape (7A) withabasematerial was obtained.

The results are shown in Table 1.

### [Example 8]

70 Parts by weight of a bisphenol A-type epoxy resin (grade: 834, manufactured by Mitsubishi Chemical Corporation), 30 parts by weight of a polyamide resin (grade: PA-201, fatty acid-modified polyamide-based resin, melting point: 122°C, manufactured by T&K TOKA Corporation), 2 parts by weight of a curing agent (DCMU-99, manufactured by Hodogaya Chemical Co. , Ltd.), and 5 parts by weight of a curing agent (DDA50, manufactured by CVC Thermoset Specialties) were blended, and the blend was kneaded with a mixing roll to prepare a resin composition (8) as a kneaded product.

Next, the resultant resin composition (8) was rolled with a press molding machine to have a thickness of 0.5 mm in a state of being sandwiched between sheets of release paper. Thus, an adhesive tape (8B) without a base material was obtained.

The results are shown in Table 1.

### [Comparative Example 1]

A resin composition (C1) was prepared as a kneaded product in the same manner as in Example 1 except that the blending ratios of the materials for obtaining the resin composition were changed as shown in Table 2.

Next, the resultant resin composition (C1) was rolled with a press molding machine to have a thickness of 0.2 mm in a state of being sandwiched between sheets of release paper. Thus, a resin layer was formed. After that, the release paper on one surface of the resin layer was peeled, and the resin layer was attached to each of both sides of a nonwoven fabric base material (polyester-based spun lace, mass per unit area=37.5 g/m², thickness=0.28 mm). The resultant was rolled with the press molding machine again to have a thickness of 0.5 mm. Thus, an adhesive tape (C1A) with a base material was obtained.

The results are shown in Table 2.

### [Comparative Example 2]

A resin composition (C2) was prepared as a kneaded product in the same manner as in Example 1 except that the blending ratios of the materials for obtaining the resin composition were changed as shown in Table 2.

Next, the resultant resin composition (C2) was rolled with a press molding machine to have a thickness of 0.2 mm in a state of being sandwiched between sheets of release paper. Thus, a resin layer was formed. After that, the release paper on one surface of the resin layer was peeled, and the resin layer was attached to each of both sides of a nonwoven fabric base material (polyester-based spun lace, mass per unit area=37.5 g/m², thickness=0.28 mm). The resultant was rolled with the press molding machine again to have a thickness of 0.5 mm. Thus, an adhesive tape (C2A) with a base material was obtained.

The results are shown in Table 2.

### [Comparative Example 3]

A resin composition (C3) was prepared as a kneaded product in the same manner as in Example 1 except that the blending ratios of the materials for obtaining the resin composition were changed as shown in Table 2.

Next, the resultant resin composition (C3) was rolled with a press molding machine to have a thickness of 0.2 mm in a state of being sandwiched between sheets of release paper. Thus, a resin layer was formed. After that, the release paper on one surface of the resin layer was peeled, and the resin layer was attached to each of both sides of a nonwoven fabric base material (polyester-based spun lace, mass per unit area=37.5 g/m², thickness=0.28 mm). The resultant was rolled with the press molding machine again to have a thickness of 0.5 mm. Thus, an adhesive tape (C3A) with a base material was obtained.

The results are shown in Table 2.

### [Comparative Example 4]

30 Parts by weight of a bisphenol A-type epoxy resin (grade: 1004, manufactured by Mitsubishi Chemical Corporation), 70 parts by weight of a rubber-modified epoxy resin (grade: EPR1309, manufactured by ADEKA Corporation), 2 parts by weight of a curing agent (DCMU-99, manufactured by Hodogaya Chemical Co., Ltd.), and 5 parts by weight of a curing agent (DDA50, manufactured by CVC Thermoset Specialties) were blended, and the blend was kneaded with a mixing roll to prepare a resin composition (C4) as a kneaded product.

Next, the resultant resin composition (C4) was rolled with a press molding machine to have a thickness of 0.2 mm in a state of being sandwiched between sheets of release paper. Thus, a resin layer was formed. After that, the release paper on one surface of the resin layer was peeled, and the resin layer was attached to each of both sides of a nonwoven fabric base material (polyester-based spun lace, mass per unit area=37.5 g/m², thickness=0.28 mm). The resultant was rolled with the press molding machine again to have a thickness of 0.5 mm. Thus, an adhesive tape (C4A) with a base material was obtained.

The results are shown in Table 2.

**[Table 1]**

| | | | Example 1 | Example 2 | Example 3 | Example 4 | Example 5 | Example 6 | Example 7 | Example 8 |
|---|---|---|---|---|---|---|---|---|---|---|
| Composition | Bisphenol A-type epoxy resin (834) | | 60 | 70 | 80 | 50 | 50 | 30 | 70 | 70 |
| | Bisphenol A-type epoxy resin (1004) | | - | - | - | - | - | - | - | - |
| | Rubber-modified epoxy resin (EPR1309) | | - | - | - | - | - | - | - | - |
| | Diphenyldiaminomethane-type epoxy resin (JER604) | | - | - | - | 20 | - | 30 | - | - |
| Part(s) by weight | Cresol novolac-type epoxy resin (YDCN704) | | - | - | - | - | 20 | - | - | - |
| | Polyamide resin (PA-201) | | - | - | - | - | - | - | 30 | 30 |
| | Polyamide resin (TXM-272) | | 40 | 30 | 20 | 30 | 30 | 40 | - | - |
| | Curing agent (DCMU99) | | 2 | 2 | 2 | 2 | 2 | 2 | 2 | 2 |
| | Curing agent (DDA50) | | 5 | 5 | 5 | 5 | 5 | 5 | 5 | 5 |
| | TEPEX dynalite 201-C200 | Room temperature | 16.9 | 16.7 | 16.7 | 13.6 | 15.3 | 14.7 | 15.8 | 11.0 |
| | | 80°C | 8.4 | 13.5 | 15.4 | 14.0 | 13.6 | 14.8 | 13.7 | 9.1 |
| Shearing adhesive strength | TEPEX dynalite 207-C200 | Room temperature | 12.4 | 11.7 | 12.5 | 11.5 | 11.3 | 10.6 | 10.2 | 11.2 |
| | | 80°C | 7.4 | 11.3 | 13.0 | 10.3 | 13.5 | 9.2 | 13.2 | 10.1 |
| | TEPEX dynalite 208-C200 | Room temperature | 16.9 | 14.9 | 13.3 | 12.5 | 13.6 | 13.6 | 12.6 | 11.0 |
| MPa | | 80°C | 8.1 | 11.9 | 14.8 | 15.5 | 14.8 | 16.8 | 15.3 | 5.7 |
| | TEPEX dynalite 104-RG600 | Room temperature | 4.2 | 4.1 | 3.7 | 3.9 | 4.1 | 3.9 | 4.3 | 4.3 |
| | | 80°C | 2.6 | 3.1 | 2.7 | 3.2 | 2.7 | 2.9 | 2.7 | 2.6 |

**[Table 2]**

| | | | Comparative Example 1 | Comparative Example 2 | Comparative Example 3 | Comparative Example 4 |
|---|---|---|---|---|---|---|
| Composition | Bisphenol A-type epoxy resin (834) | | 20 | 40 | 50 | - |
| | Bisphenol A-type epoxy resin (1004) | | - | - | - | 30 |
| | Rubber-modified epoxy resin (EPR1309) | | - | - | - | 70 |
| | Diphenyldiaminomethane-type epoxy resin (JER604) | | - | - | - | - |
| Part(s) by weight | Cresol novolac-type epoxy resin (YDCN704) | | - | - | - | - |
| | Polyamide resin (PA-201) | | - | - | - | - |
| | Polyamide resin (TXM-272) | | 80 | 60 | 50 | - |
| | Curing agent (DCMU99) | | 2 | 2 | 2 | 2 |
| | Curing agent (DDA50) | | 5 | 5 | 5 | 5 |
| Shearing adhesive strength | TEPEX dynalite 201-C200 | Room temperature | 14.2 | 13.5 | 16.4 | 13.0 |
| | | 80°C | 0.7 | 3.3 | 4.4 | 2.5 |
| | TEPEX dynalite 207-C200 | Room temperature | 11.5 | 10.6 | 10.4 | 6.6 |
| | | 80°C | 1.6 | 3.8 | 2.7 | 4.2 |
| MPa | TEPEX dynalite 208-C200 | Room temperature | 15.3 | 16.7 | 16.3 | 8.2 |
| | | 80°C | 3.2 | 4.2 | 5.3 | 2.8 |
| | TEPEX dynalite 104-RG600 | Room temperature | 4.5 | 4.3 | 4.3 | 2.1 |
| | | 80°C | 1.0 | 2.1 | 2.0 | 0.4 |

**[Table 3]**

| | | | Example 3 | | |
|---|---|---|---|---|---|
| Composition | Bisphenol A-type epoxy resin (834) | | 80 | | |
| | Bisphenol A-type epoxy resin (1004) | | - | | |
| | Rubber-modified epoxy resin (EPR1309) | | - | | |
| | Diphenyldiaminomethane-type epoxy resin(JER604) | | - | | |
| Part(s) by weight | Cresol novolac-type epoxy resin (YDCN704) | | - | | |
| | Polyamide resin (PA-201) | | - | | |
| | Polyamide resin (TXM-272) | | 20 | | |
| | Curing agent (DCMU99) | | 2 | | |
| | Curing agent (DDA50) | | 5 | | |
| Primer None | | | | RC-1027 | Primer (1) |
| Shearing adhesive strength | TEPEX dynalite 201-C200 | Room temperature | 16.7 | - | 18.7 |
| | | 80°C | 15.4 | - | 17.0 |
| | TEPEX dynalite 207-C200 | Room temperature | 12.5 | - | - |
| | | 80°C | 13.0 | - | - |
| MPa | TEPEX dynalite 208-C200 | Room temperature | 13.3 | - | - |
| | | 80°C | 14.8 | - | - |
| | TEPEX dynalite 104-RG600 | Room temperature | 3.7 | 6.7 | - |
| | | 80°C | 2.7 | 3.1 | - |

**[Table 4]**

| | | | Example 4 | | | |
|---|---|---|---|---|---|---|
| Composition | Bisphenol A-type epoxy resin (834) | | 50 | | | |
| | Bisphenol A-type epoxy resin (1004) | | - | | | |
| | Rubber-modified epoxy resin (EPR1309) | | - | | | |
| | Diphenyldiaminomethane-type epoxy resin(JER604) | | 20 | | | |
| Part(s) by weight | Cresol novolac-type epoxy resin (YDCN704) | | - | | | |
| | Polyamide resin (PA-201) | | - | | | |
| | Polyamide resin (TXM-272) | | 30 | | | |
| | Curing agent (DCMU99) | | 2 | | | |
| | Curing agent (DDA50) | | 5 | | | |
| Primer | | | None | RC-1027 | AP-134 | Primer (1) |
| Shearing adhesive strength | TEPEX dynalite 201-C200 | Room temperature | 13.6 | - | 17.5 | 19.2 |
| | | 80°C | 14.0 | - | 17.7 | 19.7 |
| | TEPEX dynalite 207-C200 | Room temperature | 11.5 | - | - | - |
| | | 80°C | 10.3 | - | - | - |
| MPa | TEPEX dynalite 208-C200 | Room temperature | 12.5 | - | - | - |
| | | 80°C | 15.5 | - | - | - |
| | TEPEX dynalite 104-RG600 | Room temperature | 3.9 | 5.9 | - | - |
| | | 80°C | 2.2 | 3.8 | - | - |

**[Table 5]**

| | | | Example 5 | | |
|---|---|---|---|---|---|
| Composition | Bisphenol A-type epoxy resin (834) | | 50 | | |
| | Bisphenol A-type epoxy resin (1004) | | - | | |
| | Rubber-modified epoxy resin (EPR1309) | | - | | |
| | Diphenyldiaminomethane-type epoxy resin(JER604) | | 20 | | |
| Part(s) by weight | Cresol novolac-type epoxy resin (YDCN704) | | - | | |
| | Polyamide resin (PA-201) | | - | | |
| | Polyamide resin (TXM-272) | | 30 | | |
| | Curing agent (DCMU99) | | 2 | | |
| | Curing agent (DDA50) | | 5 | | |
| Sandblast | | | #24 | #100 | #220 |
| Shearing adhesive strength | TEPEX dynalite 201-C200 | Room temperature | 20.2 | 19.7 | 20.6 |
| | | 80°C | 14.7 | 16.5 | 17.6 |
| | TEPEX dynalite 207-C200 | Room temperature | 13.2 | 17.2 | 17.3 |
| | | 80°C | 12.5 | 15.0 | 14.1 |
| MPa | TEPEX dynalite 208-C200 | Room temperature | - | - | - |
| | | 80°C | - | - | - |
| | TEPEX dynalite 104-RG600 | Room temperature | - | - | - |
| | | 80°C | - | - | - |

**[Table 6]**

| | | | Example 5 | | | |
|---|---|---|---|---|---|---|
| Composition | Bisphenol A-type epoxy resin (834) | | 50 | | | |
| | Bisphenol A-type epoxy resin (1004) | | - | | | |
| | Rubber-modified epoxy resin (EPR1309) | | - | | | |
| | Diphenyldiaminomethane-type epoxy resin (JER604) | | 20 | | | |
| Part(s) by weight | Cresol novolac-type epoxy resin (YDCN704) | | - | | | |
| | Polyamide resin (PA-201) | | - | | | |
| | Polyamide resin (TXM-272) | | 30 | | | |
| | Curing agent (DCMU99) | | 2 | | | |
| | Curing agent (DDA50) | | 5 | | | |
| Plasma irradiation speed | | | 11 mm/sec | 25 mm/sec | 66 mm/sec | 100 mm/sec |
| Shearing adhesive strength | TEPEX dynalite 201-C200 | Room temperature | 21.8 | - | - | - |
| | | 80°C | 18.9 | - | - | - |
| | TEPEX dynalite 207-C200 | Room temperature | - | 17.3 | - | - |
| | | 80°C | - | 16.8 | - | - |
| MPa | TEPEX dynalite 208-C200 | Room temperature | - | - | - | 13.5 |
| | | 80°C | - | - | - | 16.0 |
| | TEPEX dynalite 104-RG600 | Room temperature | - | - | 5.8 | - |
| | | 80°C | - | - | 3.9 | - |

**[Table 7]**

| | | | Example 5 | |
|---|---|---|---|---|
| Composition | Bisphenol A-type epoxy resin (834) | | 50 | |
| | Bisphenol A-type epoxy resin (1004) | | - | |
| | Rubber-modified epoxy resin (EPR1309) | | - | |
| | Diphenyldiaminomethane-type epoxy resin (JER604) | | 20 | |
| Part(s) by weight | Cresol novolac-type epoxy resin (YDCN704) | | - | |
| | Polyamide resin (PA-201) | | - | |
| | Polyamide resin (TXM-272) | | 30 | |
| | Curing agent (DCMU99) | | 2 | |
| | Curing agent (DDA50) | | 5 | |
| | Tackifier (part(s) by weight) | | Resorcin (5 parts by weight) | Catechol (5 parts by weight) |
| Shearing adhesive strength | TEPEX dynalite 201-C200 | Room temperature | 19.1 | 17.7 |
| | | 80°C | 16.2 | 15.8 |
| | TEPEX dynalite 207-C200 | Room temperature | 14.6 | 14.0 |
| | | 80°C | 14.9 | 13.5 |
| MPa | TEPEX dynalite 208-C200 | Room temperature | 13.5 | 12.7 |
| | | 80°C | 14.4 | 12.4 |
| | TEPEX dynalite 104-RG600 | Room temperature | 4.6 | 4.5 |
| | | 80°C | 3.2 | 3.2 |

As canbe seen from Tables 1 and 2, the adhesive resincomposition of the present invention, the adhesive tape formed by curing the adhesive resin composition of the present invention, and the adhesive tape with a base material having the base material layer and the layer formed by curing the adhesive resin composition of the present invention can each be used as an adhesive that conforms well to a fiber-reinforced thermoplastic (FRTP) and can express a sufficient adhesive strength to any other adherend. In addition, a composite article containing any one of the adhesive resin composition, the adhesive tape, and the adhesive tape with a base material of the present invention, and the fiber-reinforced thermoplastic (FRTP) can be provided.

In addition, as can be seen from Tables 3 to 7, conformity to a fiber-reinforced thermoplastic (FRTP) is expressed more significantly by performing a primer treatment, a sandblast treatment, or a plasma treatment, or by adding a tackifier.

### Industrial Applicability

The adhesive resin composition of the present invention, the adhesive tape formed by curing the adhesive resin composition of the present invention, and the adhesive tape with a base material having the base material layer and the layer formed by curing the adhesive resin composition of the present invention are suitable as an adhesive and an adhesive tape for lightweight materials to be used in transportation machines, such as a railway vehicle, an aircraft, aship, andanautomobile. Therefore, therecanbeprovided, for example, a composite article that contains any one of the adhesive resin composition, the adhesive tape, and the adhesive tape with a base material of the present invention, and a carbon fiber-reinforced thermoplastic (CFRTP), which has been finding use in a wider variety of applications in recent years, and that can serve as an excellent material.

## Claims

1. An adhesive resin composition, comprising:
a polyamide-based resin; and
an epoxy-based resin,
wherein a content of the polyamide-based resin is 15 parts by weight or more and less than 100 parts by weight with respect to 100 parts by weight of the epoxy-based resin.

2. The adhesive resin composition according to claim 1, wherein the polyamide-based resin comprises a fatty acid-modified polyamide-based resin.

3. The adhesive resin composition according to claim 2, wherein the fatty acid-modified polyamide-based resin has a melting point of 180°C or less.

4. The adhesive resin composition according to any one of claims 1 to 3, wherein the epoxy-based resin contains at least one kind selected from a bisphenol A-type epoxy resin and a heat-resistant epoxy resin.

5. An adhesive resin composition, comprising:
a polyamide-based resin; and
an epoxy-based resin,
wherein a shearing adhesive strength of an adhesive tape formed by curing the adhesive resin composition to a fiber-reinforced thermoplastic is from 2.5 MPa to 70.0 MPa at 25°C and from 2.2 MPa to 70.0 MPa at 80°C.

6. The adhesive resin composition according to claim 5, wherein a shearing adhesive strength of the adhesive tape formed by curing the adhesive resin composition to a carbon fiber-reinforced thermoplastic is from 8.0 MPa to 100 MPa at 25°C and from 5.5 MPa to 100 MPa at 80°C.

7. The adhesive resin composition according to claim 5 or 6, wherein the shearing adhesive strength of the adhesive tape formed by curing the adhesive resin composition to a glass fiber-reinforced thermoplastic is from 3.3 MPa to 70.0 MPa at 25°C and from 2.2 MPa to 70.0 MPa at 80°C.

8. An adhesive tape, which is formed by curing the adhesive resin composition of any one of claims 1 to 7.

9. An adhesive tape with a base material, comprising a base material layer and a layer formed by curing the adhesive resin composition of any one of claims 1 to 7.

10. A composite article, comprising the adhesive resin composition of any one of claims 1 to 7 on a surface of a fiber-reinforced thermoplastic.

11. The composite article according to claim 10, wherein at least one of a surface of the adhesive resin composition on a side of the fiber-reinforced thermoplastic or a surface of the fiber-reinforced thermoplastic on a side of the adhesive resin composition is subjected to at least one kind selected from a primer treatment, a Sandblast treatment, and a plasma treatment.

12. A composite article, comprising the adhesive tape of claim 8 arranged on a surface of a fiber-reinforced thermoplastic.

13. The composite article according to claim 12, wherein at least one of a surface of the adhesive tape on a side of the fiber-reinforced thermoplastic or a surface of the fiber-reinforced thermoplastic on a side of the adhesive tape is subjected to at least one kind selected from a primer treatment, a sandblast treatment, and a plasma treatment.

14. A composite article, comprising the adhesive tape with a base material of claim 9, which is arranged so that a side opposite to the base material layer of the adhesive tape with a base material faces toward a surface of a fiber-reinforced thermoplastic.

15. The composite article according to claim 14, wherein at least one of a surface of the adhesive tape with a base material on a side of the fiber-reinforced thermoplastic or a surface of the fiber-reinforced thermoplastic on a side of the adhesive tape with a base material is subjected to at least one kind selected from a primer treatment, a sandblast treatment, and a plasma treatment.
